Europäisches Patentamt

European Patent Office

Office européen des brevets

(11) Numéro de publication: **0 392 887**

**A1**

## DEMANDE DE BREVET EUROPEEN

(21) Numéro de dépôt: 90400525.3

(22) Date de dépôt: 26.02.90

(51) Int. Cl.⁵: **G09B 29/00, G09B 29/12**

(30) Priorité: 08.03.89 FR 8903565

(43) Date de publication de la demande:
17.10.90 Bulletin 90/42

(84) Etats contractants désignés:
AT BE CH DE ES IT LI LU

(71) Demandeur: **Deleuze, Jean-Manuel**
**8, Boulevard du Martinet**
**F-65000 Tarbes(FR)**

(72) Inventeur: **Deleuze, Jean-Manuel**
**8, Boulevard du Martinet**
**F-65000 Tarbes(FR)**

(74) Mandataire: **Morelle, Guy Georges Alain et al**
**CABINET MORELLE & BARDOU, SC 5,**
**Boulevard de la Méditerranée**
**F-31400 Toulouse(FR)**

(54) Procédé de réalisation de document cartographique.

(57) Procédé de réalisation de document cartographique, remarquable en ce qu'il consiste:
* à relever, à partir d'une projection en plan d'une région quelconque donnée, et avec une échelle donnée, les points hauts (1) et les points bas (2) de chaque élément de la topographie de ladite région,
* à relever les éventuelles ruptures de pentes (3) entre lesdits points hauts et bas,
* à matérialiser l'ensemble desdits points hauts et bas et desdites ruptures de pentes par des hachures sensiblement verticales (h1),
* à matérialiser le sens des différentes pentes par des hachures (h2) disposées entres lesdites hachures verticales (h1),
* lesdites hachures (h1, h2) n'apparaissant pas sur les contre-pentes afin d'obtenir un effet en trompe-l'oeil.

fig.2

## PROCEDE DE REALISATION DE DOCUMENT CARTOGRAPHIQUE

La présente invention intéresse le domaine de la cartographie et a pour objet un procédé de réalisation de documents cartographiques.

On connaît principalement deux types de documents de cette nature. Il s'agit des cartes topographiques dites "en hachures" et des cartes topographiques dites "en courbes de niveau".

Les premières, qui ne sont pratiquement plus employées de nos jours, représentent le relief par un graphisme qui, bien que permettant d'obtenir une bonne illustration globale d'une quelconque région, est beaucoup trop dense pour autoriser des mesures de détail avec précision. Quant aux secondes, si la précision constitue leur principal atout, l'interprétation des mesures qu'elles permettent d'effectuer ne rend pas toujours leur emploi aisé par les néophytes.

Le besoin de disposer d'un document illustrant de manière claire la topographie d'une région a ainsi conduit à l'établissement de cartes panoramiques où les principaux éléments du relief sont représentés en trois dimensions dans leur forme générale. Mais, si de tels documents permettent de fournir une idée relativement exacte de la configuration d'une région donnée, notamment d'un massif montagneux, ils sont bien évidemment inaptes à l'établissement de mesures rigoureuses.

On connaît un autre type de document cartographique décrit par le FR-A-1.263.264. Ce brevet a pour objet un procédé de représentation du relief uniquement par des points, la densité de ces points variant selon le profil du terrain illustré. Ainsi, pour une région au relief accidenté, il est utilisé une forte densité de points, alors que pour une région au faible relief, il est employé une plus faible densité de points. Ce procédé aboutit à la réalisation de cartes peu claires et en tout état de cause peu aptes à servir de support à des mesures précises, ce qui explique peut-être le fait qu'aucune ne soit disponible dans le commerce.

Les documents cartographiques obtenus avec le procédé de l'invention échappent aux inconvénients précités. Ils illustrent de manière intelligible et avec une précision voisine de celle des cartes en courbes de niveau tous les éléments du relief.

Plus précisément; l'invention a pour objet un procédé qui consiste essentiellement dans les étapes décrites ci-après.

Dans un premier temps, il est opéré, à partir d'une projection en plan classique d'une région quelconque donnée, avec une échelle donnée, à un relèvement des points hauts et des points bas de chaaque élément de la topographie de ladite région. Les points dits "hauts" seront constitués naturellement par tous les sommets : pics, croupes, crêtes, mamelons, etc... Tandis que les fonds de vallées, les vallons, les ravins, les fossés, etc... constitueront les points dits "bas".

Il sera ensuite effectué un relèvement des éventuelles ruptures de pentes entre lesdits points hauts et bas, ces ruptures de pentes étant caractéristiques de la morphologie notamment des reliefs montagneux.

Dans un dernier temps, l'ensemble desdits points hauts et bas et desdites ruptures de pentes sera matérialisé par des signes de manière à obtenir une représentation des formes desdits éléments topographiques avec leur volume.

De préférence, les signes qui seront employés à ces fins d'illustration seront des hachures disposées de telle sorte qu'on obtienne un effet en trompe-l'oeil.

Les dessins annexés permettront de mettre en évidence les caractéristiques et les nombreux avantages du procédé de l'invention et de mieux comprendre les différentes phases de sa mise en oeuvre.

Ces dessins donnent un exemple de réalisation d'un document cartographique représentant plus particulièrement une montagne.

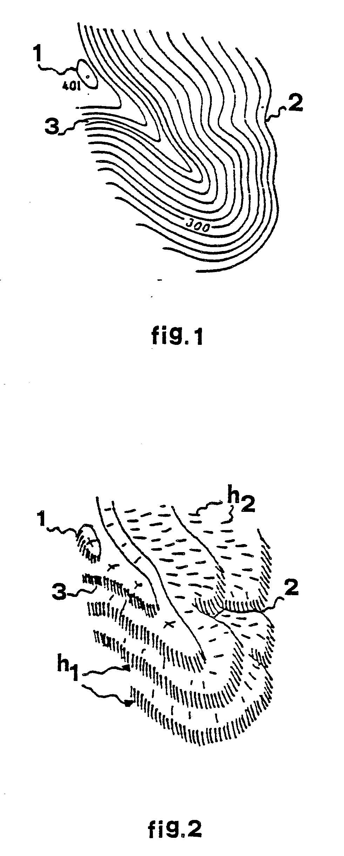

La Figure 1 est une projection en plan de ladite montagne telle qu'elle pourrait être représentée sur une carte en courbes de niveau et on pourra utiliser toute image offrant une reproduction des courbes de niveau, par exemple les cartes ipsométriques ou les orthophotoplans.

On relève sur cette projection, notamment, un point haut 1 constitué par le sommet de ladite montagne et un point bas 2 constitué par une entaille. Entre ces deux points haut et bas, on distingne plusieurs points de conjonction 3 des courbes de niveau qui caractérisent la présence de ruptures de pentes, lesquelles sont également relevées.

Comme on peut le voir maintenant à la Figure 2, qui constitue le document cartographique fini, les points 1 et 2 de même que les différentes ruptures de pentes 3, ont été matérialisées par des séries de hachures sensiblement verticales h1 entre lesquelles sont disposées des hachures non groupées h2 qui illustrent le sens des différentes pentes. On remarquera que ces hachures n'apparaissent pas sur les contre-pentes ceci afin de donner une illustration en trompe-l'oeil des formes naturelles de la montagne.

Malgré cet effet en trompe-l'oeil, la rigueur scientifique du procédé de l'invention permet d'effectuer sur les documents cartographiques obtenus, pratiquement toutes les mesures permises par les cartes en courbes de niveau.

On ajoutera en dernier lieu que ce procédé peut être mis en oeuvre par les cartographes en utilisant des moyens informatiques tels que les systèmes de dessin assisté par ordinateur.

## Revendications

1. Procédé de réalisation de document cartographique, *CARACTERISE EN CE QU'*il consiste:
•à relever, à partir d'une projection en plan d'une région quelconque donnée, et avec une échelle donnée, les points hauts (1) et les points bas (2) de chaque élément de la topographie de ladite région,
•à relever les éventuelles ruptures de pentes (3) entre lesdits points hauts et bas,
•à matérialiser l'ensemble desdits points hauts et bas et desdites ruptures de pentes par des hachures sensiblement verticales (h1),
•à matérialiser le sens des différentes pentes par des hachures (h2) disposées entre lesdites hachures verticales (h1),
•lesdites hachures (h1, h2) n'apparaissent pas sur les contre-pentes afin d'obtenir un effet en trompe-l'oeil.

2. Procédé selon la Revendication 1, *CARACTERISE EN CE QUE* ladite projection en plan est constituée par une image en courbes de niveau.

fig.1

fig.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | FR-A-1 263 264  (LIBRAIRIE A. HATIER)<br>* Résumé I,II; description; en entier *<br>--- | 1 | G 09 B  29/00<br>G 09 B  29/12 |
| A | GB-A-  27 400  (C. DOUGLAS)(A.D. 1910)<br>* En entier *<br>--- | 2 | |
| A | DE-A-3 713 147  (A.M. BEDNARZ)<br>* Revendications 1-3; page 3, lignes 17-34; figures 1-2 *<br>----- | 1,2 | |

DOMAINES TECHNIQUES RECHERCHES (Int. Cl.5)

G 09 B

Le présent rapport a été établi pour toutes les revendications

| Lieu de la recherche | Date d'achèvement de la recherche | Examinateur |
|---|---|---|
| LA HAYE | 26-06-1990 | FRANSEN L.J.L. |